(19) 

Europäisches
Patentamt

European
Patent Office

Office européen
des brevets

(11) **EP 4 324 580 A1**

(12) **EUROPÄISCHE PATENTANMELDUNG**

(43) Veröffentlichungstag:
**21.02.2024   Patentblatt 2024/08**

(21) Anmeldenummer: **22190596.1**

(22) Anmeldetag: **16.08.2022**

(51) Internationale Patentklassifikation (IPC):
*B22F 9/04* (2006.01)      *B22F 1/06* (2022.01)
*B33Y 70/00* (2020.01)     *B22F 1/052* (2022.01)

(52) Gemeinsame Patentklassifikation (CPC):
**B22F 1/06; B22F 1/052; B22F 9/04; B33Y 70/00;
C22C 1/045;** B22F 2009/043; B22F 2009/044;
C22C 1/0458

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **H.C. Starck Tungsten GmbH
80335 München (DE)**

(72) Erfinder:
• **Säuberlich, Tino
38667 Bad Harzburg (DE)**
• **Zeugner, Alexander
38302 Wolfenbüttel (DE)**

• **Wolff, Alexander
31141 Hildesheim (DE)**
• **Egeberg, Alexander
38642 Goslar (DE)**
• **Olbrich, Armin
38723 Seesen (DE)**
• **Meese-Marktscheffel, Juliane
38642 Goslar (DE)**

(74) Vertreter: **dompatent von Kreisler Selting Werner -
Partnerschaft von Patent- und Rechtsanwälten
mbB
Deichmannhaus am Dom
Bahnhofsvorplatz 1
50667 Köln (DE)**

(54) **REFRAKTÄRMETALLPULVER FÜR DIE ADDITIVE FERTIGUNG UND VERFAHREN ZU DEREN
HERSTELLUNG**

(57)     Die vorliegende Erfindung betrifft ein Refraktärmetallpulver für die additive Fertigung, ein Verfahren zu dessen
Herstellung sowie seine Verwendung in der additiven Fertigung.

**EP 4 324 580 A1**

**Beschreibung**

Die vorliegende Erfindung betrifft ein Refraktärmetallpulver für die additive Fertigung, ein Verfahren zu dessen Herstellung sowie seine Verwendung in der additiven Fertigung.

TECHNISCHER HINTERGRUND

Unter der Bezeichnung der additiven Fertigung werden alle Fertigungsverfahren zusammengefasst, bei denen das Bauteil - im Gegensatz zu subtraktiven Verfahren - durch Hinzufügen von Volumenelementen oder Schichten direkt aus digitalen 3D-Daten automatisiert aufgebaut wird oder auf einem bestehenden Werkstück weitere Volumenelemente aufgetragen und so dreidimensionale Gegenstände erzeugt werden. Dabei erfolgt der schichtweise Aufbau in der Regel computergesteuert aus einem oder mehreren flüssigen oder festen Werkstoffen. Der Aufbau des dreidimensionalen Gegenstands wird über verschiedene physikalische und chemische Härtungs- und Schmelzprozesse erreicht, so dass die Herstellung eines konkreten Erzeugnisses ohne spezielle Werkzeuge, die die jeweilige Geometrie des Erzeugnisses gespeichert haben, möglich ist.

Während die Verarbeitung von Kunststoffen, Kunstharzen und Keramiken zur Herstellung von komplexen Modellen, Mustern und Prototypen in Industrie und Forschung eine breite Anwendung findet, ist die Anzahl an geeigneten Metallen weiterhin begrenzt. Dies ist unter anderem darauf zurückzuführen, dass die Metalle bestimmte Eigenschaften erfüllen müssen, um in additiven Fertigungsverfahren eingesetzt werden zu können. Dabei kann das Metall in massiver Form, wie beispielsweise als Stange oder Draht, oder in Pulverform vorliegen.

Alle Fertigungsverfahren, die von einem Metall in Pulverform ausgehen, stellen eine Reihe von Anforderungen an das zu verarbeitende Metall. Hierzu zählen unter anderem eine gute Fließfähigkeit und eine hohe Schütt- und Klopfdichte, um zum einen ein gleichmäßiges und definiertes Auftragen im Fertigungsprozess zu erreichen und zum anderen ein dichtes Bauteil zu erhalten.

Metallpulver, die das genannte Anforderungsprofil erfüllen, weisen in der Regel eine hohe Sphärizität auf, die sich derzeit nur durch energieintensive Schmelz- und Verdüsungsverfahren erreichen lässt.

So beschreibt WO 2020/220143 ein durch Plasmabehandlung hergestelltes Metallpulver für additive Fertigungsverfahren, das sphärische Partikel mit einer Partikelgrößenverteilung von 0 bis 1000 $\mu$m umfasst und eine Fließfähigkeit von bis zu 20 s aufweist.

TECHNISCHES PROBLEM

Das Aufschmelzen von Metallen mit sehr hohen Schmelztemperaturen, wie sie für die Refraktärmetalle typisch sind, führt zu sehr hohen spezifischen Energiebedarfen und damit verbunden zu hohen Fertigungskosten. Vor diesem Hintergrund liegt der vorliegenden Erfindung die Aufgabe zugrunde, ein Refraktärmetallpulver zur Verfügung zu stellen, das zum einen für den Einsatz in der additiven Fertigung geeignet ist und zum anderen mittels nachhaltigerer Verfahren als im Stand der Technik bekannt erhältlich ist.

TECHNISCHE LÖSUNG

Im Rahmen der vorliegenden Erfindung wurde überraschend gefunden, dass auch Pulver, die nicht die im Stand der Technik proklamierte Sphärizität aufweisen, in additiven Fertigungsverfahren eingesetzt werden können. So hat sich überraschend gezeigt, dass auch Pulver mit Partikeln, die in ihrer Form von der der üblicherweise angestrebten idealen Kugelform abweichen, für die additive Fertigung geeignet sind.

ALLGEMEINE BEMERKUNGEN

Sofern nicht anders angegeben, bezieht sich die Korngrößenverteilung bestimmt mittels Laserbeugung auf die Massenverteilung der Partikel. Dabei gilt:

D10: 10 % der Masse des Pulvers weisen eine Partikelgröße auf, die kleiner ist als der angegebene Wert, beziehungsweise 90% der Masse des Pulvers weisen eine Partikelgröße auf, die größer ist als der angegebene Wert.

D50: 50 % der Masse des Pulvers weisen eine Partikelgröße auf, die kleiner ist als der angegebene Wert, beziehungsweise 50 % der Masse des Pulvers weisen eine Partikelgröße auf, die größer ist als der angegebene Wert.

D90: 90 % der Masse des Pulvers weisen eine Partikelgröße auf, die kleiner ist als der angegebene Wert, beziehungsweise 10 % der Masse des Pulvers weisen eine Partikelgröße auf, die größer ist als der angegebene Wert.

Im Rahmen der vorliegenden Anmeldung werden die Begriffe Korn und Partikel sowie Korngröße und Partikelgröße jeweils als Synonym verwendet.

Unter nicht-sphärischen Partikeln im Sinne der vorliegenden Erfindung werden insbesondere solche verstanden, die eine zylindrische oder ellipsoide Form aufweisen.

Unter Fraktion wird im Sinne der vorliegenden Erfindung der separierte Anteil eines Pulvers verstanden, der durch einen Trennvorgang erhalten wird, wobei bei einem Trennvorgang mindestens zwei Fraktionen entstehen. Die Trennung kann dabei anhand eines charakteristischen Merkmals wie beispielsweise die Masse, die Dichte, die Größe, die Farbe oder die Form erfolgen.

## AUSFÜHRLICHE BESCHREIBUNG DER ERFINDUNG

Ein erster Gegenstand der vorliegenden Erfindung ist ein nicht-sphärisches Refraktärmetallpulver für die additive Fertigung von dreidimensionalen Bauteilen, das aus nichtkugelförmigen Partikeln besteht, wobei jeder Partikel $A_n$ Ausdehnungen aufweist, wobei mindestens 2 der Ausdehnungen $A_n$ verschiedenen voneinander sind. Die Ausdehnungen der Partikel können beispielsweise mittels optischer Verfahren an REM-Aufnahmen bestimmt werden.

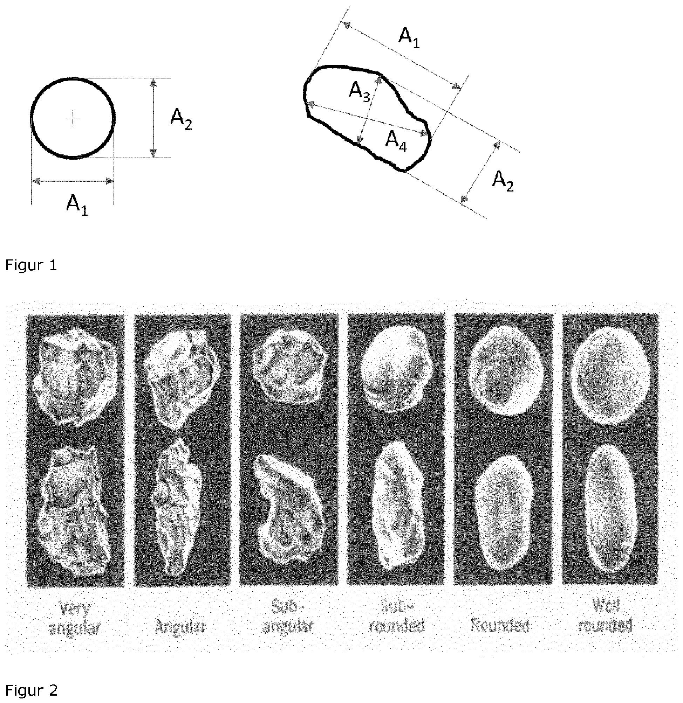

Unter Ausdehnung im Sinne der vorliegenden Erfindung wird ein beliebiger Abstand zweier Punkte auf der Oberfläche des Partikels verstanden, deren Verbindungsgerade durch den Schwerpunkt des Partikels verläuft. Während kugelförmige Partikel in allen Raumdimensionen den gleichen Abstand von der Oberfläche zum Mittelpunkt aufweisen, lassen sich bei allen Partikeln des Refraktärmetallpulvers gemäß der vorliegenden Erfindung eine beliebige Anzahl von Ausdehnungen bestimmen, von denen jeweils mindestens zwei, vorzugsweise mindestens 3, besonders bevorzugt mindestens 4, voneinander verschieden sind. Während für ein kugelförmiges Partikel $A_1 = A_2$ gilt, zeichnet sich das erfindungsgemäße Pulver insbesondere dadurch aus, dass es mindestens zwei Abstände aufweist, für die gilt $A_1 \neq A_2$. Zur weiteren Verdeutlichung wird auf Figur 1 verwiesen. In einer besonders bevorzugten Ausführungsform des erfindungsgemäßen Refraktärmetallpulvers unterscheiden sich die minimale Ausdehnung $A_{min}$ und die maximale Ausdehnung $A_{max}$ eines Partikels um den Faktor f(A), wobei f(A) einen Wert von >1.001 bis 5 annimmt. In einer weiterhin bevorzugten Ausführungsform weisen die Partikel ein Verhältnis von maximaler Ausdehnung $A_{max}$ zu minimaler Ausdehnung $A_{min}$ ($A_{max}/A_{min}$) von <5 auf.

Im Rahmen der vorliegenden Erfindung wurde überraschend gefunden, dass sich Pulver, die aus nicht-sphärischen Partikeln bestehen, durch eine besondere Verteilungsfunktion ihrer Korngröße auszeichnen, da hier das üblicherweise bei der Korngrößenverteilung zugrunde gelegte Modell der volumengleichen Kugeln nicht greift.

In einer bevorzugten Ausführungsform zeichnet sich das Refraktärmetallpulver der vorliegenden Erfindung durch eine Korngrößenverteilung aus, die wie folgt bestimmt ist:

- Sieben des Refraktärmetallpulvers unter Verwendung von n Sieben, wobei n $\geq 2$ ist, und wobei die Siebe eine unterschiedliche Maschenweite aufweisen;
- Erhalt von $F(x_i) = n + 1$ Fraktionen, mit einer Grobkorn-Fraktion $F(x_i+1)$ mit $F(x_i+1) > x_i$; einer Mittelkorn-Fraktionen $F(x_i)$ mit $F(x_i) = x_i$ und einer Feinkorn-Fraktion $F(x_i-1)$ mit $F(x_i-1) < x_i$, wobei $x_i$ die Maschenweite des Siebs bezeichnet und wobei $x_{i+1}/x_i = a_i$ mit $1{,}1 \leq a_i \leq 1{,}5$;
- Bestimmen der Korngrößenverteilung der erhaltenen Mittelkorn-Fraktion $F(x_i)$ mittels Laserbeugung,

wobei der mittels Laserbeugung bestimmte D90-Wert der Korngrößenverteilung der Fraktion $F(x_i)$ jeweils größer ist als die Maschenweite des Siebs $x_i+1$, wobei gilt $x_i+1 > x_i$.

Die Siebung kann gemäß DIN 66165 erfolgen, wobei beispielsweise Siebtürme mit genormten Prüfsieben, wie sie in der DIN ISO 3310 oder ASTM B214 beschrieben sind, verwendet werden können.

Die Bestimmung mittels Laserbeugung kann gemäß DIN ISO 13320 erfolgen. In einer bevorzugten Ausführungsform ist $a_i$ für alle Verhältnisse $x_{i+1}/x_i$ im Wesentlichen gleich, wobei die Abweichung zwischen den Werten vorzugsweise weniger als 5 %, besonders bevorzugt weniger als 3 % beträgt.

Während es bei kugelförmigen Partikeln egal ist in welcher Lage ein Partikel durch die Maschen des Siebes fällt, ist dies bei nicht kugelförmigen Partikeln nicht der Fall. Hier gibt es eine Längenausdehnung die größer ist als die Maschenweite des Siebes. Ohne an eine bestimmte Theorie gebunden zu sein, wird davon ausgegangen, dass dieser Effekt dazu führt, dass die Verteilung der Fraktion $F(x_i)$ bei nicht-kugelförmigen Partikel einen Mengenanteil aufweist, der gröber ist als die Maschenweite des gröberen Siebs $x_{i+1}$, wobei die Korngrößenverteilung der Fraktionen jeweils mittels Laserbeugung bestimmt wird.

Die Siebung des erfindungsgemäßen Pulvers im Rahmen der Bestimmung seiner Korngrößenverteilung erfolgt vorzugsweise mit Sieben einer Reihe, bei der sich die Siebmaschen $x_i$ der Siebe jeweils um einen konstanten Faktor unterscheiden, insbesondere mit Sieben, für die gilt $x_i+1 = a_i{}^*x_i$; wobei $1{,}38 < a_i < 1{,}43$. Insbesondere für Pulver, die auf die Verwendung in der additiven Fertigung ausgelegt sind, haben sich Siebe mit einer Maschenweite bis zu 125 μm als besonders geeignet erwiesen. Daher ist eine Ausführungsform bevorzugt, in der für die Siebung Siebe mit folgenden

Maschenweiten $x_i$ verwendet werden:

$x_i$: 32 $\mu$m (+/- 5 $\mu$m);

$x_{i+1}$: 45 $\mu$m (+/- 5 $\mu$m); vorzugsweise mit $a_1$ = 1,40

$x_{i+2}$: 63 $\mu$m (+/- 8 $\mu$m); vorzugsweise mit $a_2$ = 1,40

$x_{i+3}$: 90 $\mu$m (+/- 12 $\mu$m); vorzugsweise mit $a_3$ = 1,42

$x_{i+4}$: 125 $\mu$m (+/- 20 $\mu$m); vorzugsweise mit $a_4$ = 1,38

Die in Klammern angegebene Werte sind Toleranzangaben und beschreiben die zulässigen Abweichungen von der Nennmaschenweite.

Die Partikelgrößenverteilung kugelförmiger Partikel folgt in der Regel einer Normalverteilung. Im Gegensatz dazu wurde überraschend gefunden, dass die Partikelgrößenverteilung des erfindungsgemäßen Refraktärmetallpulver von dieser Verteilung abweicht. Daher ist eine Ausführungsform bevorzugt, in der das Pulver eine Kornverteilung aufweist, die einer logarithmischen Normalverteilung entspricht.

Die vorliegende Erfindung betrifft Refraktärmetalle, die sich durch ihre Passivierung als sehr korrosionsbeständig erwiesen haben. Das erfindungsgemäße Refraktärmetallpulver ist vorzugsweise ausgewählt aus der Gruppe der Metalle der 4. Nebengruppe, der 5. Nebengruppe und der 6. Nebengruppe des Periodensystems der Elemente. Besonders bevorzugt ist das Refraktärmetall ausgewählt aus der Gruppe bestehend aus Titan, Zirkonium, Hafnium, Vanadium, Niob, Tantal, Chrom, Molybdän und Wolfram. Vorzugsweise handelt es sich bei dem Refraktärmetall um Wolfram, welches vorzugsweise durch Reduktion aus Wolframoxid gewonnen wird.

Das erfindungsgemäße Refraktärmetallpulver ist insbesondere auf die Anforderungen der additiven Fertigung abgestimmt, wobei sich insbesondere im Rahmen von Pulverdruckverfahren Fließfähigkeiten von nicht mehr als 9 s als geeignet herausgestellt haben. Im Rahmen der vorliegenden Erfindung wurde überraschend gefunden, dass diese Anforderung auch durch das erfindungsgemäße Refraktärmetallpulver erfüllt wird, trotz seiner nicht-sphärischen Form, die bis jetzt einem Einsatz in der additiven Fertigung eher als entgegenstehend angesehen wurde. Daher ist eine Ausführungsform bevorzugt, in der das Refraktärmetallpulver der vorliegenden Erfindung eine Fließfähigkeit von nicht mehr als 9 s, vorzugsweise von nicht mehr als 6 s aufweist, bestimmt mittels ASTM B213.

Weitere Eigenschaften, die über eine Einsatzfähigkeit eines Metallpulvers in der additiven Fertigung entscheiden, sind die Schüttdichte und die Klopfdichte. Auch hier wurde überraschend gefunden, dass diese Eigenschaften durch das erfindungsgemäße Refraktärmetallpulver erreicht werden, was aufgrund der von der eigentlich favorisierten kugelförmigen Partikelform abweichenden, nicht-sphärischen Form seiner Partikel so nicht zu erwarten war.

In einer bevorzugten Ausführungsform weist das erfindungsgemäße Refraktärmetallpulver eine Schüttdichte von wenigstens 40% bevorzugt größer 45%, besonders bevorzugt größer 50% der theoretischen Dichte des Refraktärmetalls auf, bestimmt gemäß ASTM B329.

Weiterhin bevorzugt weist das Refraktärmetallpulver eine Klopfdichte von wenigstens 45%, bevorzugt größer 50%, besonders bevorzugt größer 56% der theoretischen Dichte des Refraktärmetalls auf, bestimmt gemäß ASTM B527. Das erfindungsgemäße Pulver weist somit sowohl eine Schüttdichte als auch eine Klopfdichte auf, die mit denen herkömmlicher Pulver mit sphärischen Partikeln vergleichbar ist.

Die Schütt- und Klopfdichte werden in Referenz zu der theoretischen Dichte des Refraktärmetalls angegeben. Für den beispielhaften Fall, dass es sich bei dem Refraktärmetall um Wolframmetall handelt, ist eine Dichte von 19,25 g/cm$^3$ als 100% Referenz anzusetzen. Die theoretischen Dichten der Refraktärmetalle sind dem Fachmann bekannt und können entsprechenden Nachschlagewerken entnommen werden.

Das erfindungsgemäße Pulver unterscheidet sich von denen des Stands der Technik insbesondere durch die nicht-sphärische Form seiner Partikel. Die Sphärizität eines Körpers ist dabei definiert als das Verhältnis der Oberfläche einer Kugel gleichen Volumens zur Oberfläche des Körpers, wobei eine Sphärizität von 1 eine Kugel beschreibt. Daher ist eine Ausführungsform bevorzugt, in der das Refraktärmetallpulver einen Sphärizitätsfaktor von < 0,95, vorzugsweise von 0,65 bis 0,9 aufweist. Die Sphärizität kann dabei statisch gemäß ISO 13322-1 oder dynamisch gemäß ISO 13322-2 bestimmt werden. Als besonders vorteilhaft haben sich im Rahmen der vorliegenden Erfindung Refraktärmetallpulver erwiesen, die eine Partikelform von "sub-rounded" oder "rounded" aufweisen, nach der Klassifikation von Power in: Power, M.C., Journal of Sedimentary Petrology, 1953, Band 23, Seite 118 (vgl. Figur 2).

Refraktärmetallpulver weisen an der Oberfläche eine natürliche Oxid-Passivierung auf, die sie zwar relativ korrosionsbeständig macht, die aber aufgrund der eingetragenen Fremdelemente zu Fehlstellen im mittels additiver Fertigung gefertigten Bauteil führen kann. Daher ist eine Ausführungsform bevorzugt, in der das Refraktärmetallpulver einen Sauerstoffgehalt von maximal 1000 ppm, vorzugsweise maximal 500 ppm aufweist, bestimmt mittels LECO Verfahren.

Refraktärmetallpulver für die additive Fertigung, wie sie im Stand der Technik beschrieben werden, weisen den Nachteil auf, dass sie sich nur mittels Plasmasphärodisierung oder anderer, energieintensiver Verdüsungsverfahren herstellen lassen, bei der das Metall auf- oder angeschmolzen und versprüht wird, was vor allem bei den hohen Schmelzpunkten der Refraktärmetalle mit einem erheblichen Energieaufwand verbunden ist. Im Gegensatz dazu wurde überraschend gefunden, dass sich das erfindungsgemäße Pulver mittels einfacher mechanischer Verfahren herstellen lässt. Diese Verfahren haben insbesondere den Vorteil, dass das Metall nicht über seinen Schmelzpunkt hinaus erhitzt werden muss. Daher ist ein weiterer Gegenstand der vorliegenden Erfindung ein Verfahren zur Herstellung des erfindungsgemäßen Pulvers, das die folgenden Schritte umfasst:

i) Bereitstellen eines Ausgangsrefraktärmetallpulvers mit einer Korngrößenverteilung D10 von wenigstens 10 $\mu$m und D90 kleiner 1000 $\mu$m, bestimmt mittels Laserbeugung;

ii) Mechanisches Behandeln des Ausgangsrefraktärmetallpulvers unter Erhalt des erfindungsgemäßen Refraktärmetallpulvers.

Das allgemeine Anforderungsprofil für Metallpulver in der additiven Fertigung sieht eine Mindestkorngröße von 10 $\mu$m vor. Hierbei hat es sich als vorteilhaft erwiesen, wenn das Ausgangspulver bereits eine entsprechende Korngrößenverteilung aufweist, so dass ein erster Schritt des erfindungsgemäßen Verfahrens die Bereitstellung eines Ausgangsrefraktärmetallpulvers mit einer Korngrößenverteilung D10 von wenigstens 10 $\mu$m ist, wobei der D90 kleiner als 1000 $\mu$m sein sollte.

Vorzugsweise weisen die Partikel des Ausgangsrefraktärmetallpulvers neben der angegebenen Korngrößenverteilung eine kompakte, nicht poröse Struktur auf. In einer bevorzugten Ausführungsform weist das Ausgangsrefraktärmetallpulver daher vorzugsweise eine Dichte von mindestens 80% der theoretischen Dichte, besonders bevorzugt mindestens 90% und insbesondere mindestens 95% der theoretischen Dichte des Refraktärmetalls auf. Die theoretischen Dichten der Materialien sind dem Fachmann bekannt und können entsprechenden Tabellenwerken entnommen werden.

Im Rahmen des erfindungsgemäßen Verfahrens wird ein Ausgangsrefraktärmetallpulver einer mechanischen Behandlung unterworfen. Durch diese mechanische Behandlung können dem Pulver überraschenderweise die für die Verwendung in der additiven Fertigung notwendigen Eigenschaften, mit zur Schmelzsphärodisierung vergleichsweise geringem Energieaufwand, verliehen werden. Ohne an eine bestimmte Theorie gebunden zu sein, wird angenommen, dass es durch die mechanische Behandlung des Ausgangspulvers zu einer Glättung der Oberflächen der Partikel kommt, wodurch die vorteilhaften Eigenschaften erreicht werden. Daher ist die mechanische Behandlung vorzugsweise so gewählt, dass es nicht zu einer Zerkleinerung der Partikel kommt.

Als besonders vorteilhaft haben sich in diesem Zusammenhang die mechanische Behandlung in einer Kugelmühle oder Strahlmühle herausgestellt.

Daher ist eine Ausführungsform des erfindungsgemäßen Verfahrens bevorzugt, in der mechanische Behandlung des Ausgangsrefraktärmetallpulvers in einer Kugelmühle durchgeführt wird. Um die Bildung von Plättchen durch Zusammendrücken der Partikel zu begrenzen, hat es sich als vorteilhaft erwiesen, die Größe und Anzahl der Mahlkugel entsprechend zu wählen. Daher ist eine Ausführungsform bevorzugt, in der die Größe der Mahlkugeln höchstens 8 mm, bevorzugt 4 mm oder weniger beträgt, wobei die Angabe den Durchmesser der Mahlkugeln bezeichnet. Weiterhin sollte die Masse der Mahlkugeln im Verhältnis zu der zu behandelnden Pulvermenge stehen. In diesem Zusammenhang ist eine Ausführungsform des erfindungsgemäßen Verfahrens bevorzugt, in der die Gewichte von Ausgangsrefraktärmetallpulver und der Mahlkugeln in einem Verhältnis von 1:1 bis 1:5 stehen. Beide Maßnahmen dienen dazu den Energieeintrag zu begrenzen und auf diese Weise Pulverpartikel in für die additive Fertigung geeigneter Form zu erhalten. Die Mahlkugeln können hierbei aus EisenBasis Werkstoffen, Stahl, Fe-Co,Ni-Legierungen, aus Keramik oder Hartmetall gefertigt sein. Die mechanische Behandlung in der Kugelmühle wird vorzugsweise für einen Zeitraum von 3 bis 7 Stunden, vorzugsweise 4 bis 6 und insbesondere 4,5 bis 5,5 Stunden vorgenommen. Nach dieser Zeit wiesen die Pulverpartikel eine ausreichend abgerundete Form auf, um das Pulver für die additive Fertigung verwenden zu können. Die Drehzahl der Kugelmühle wird bei der mechanischen Behandlung vorzugsweise so gewählt, dass sie kleiner als die kritische Drehzahl ist. Die kritische Drehzahl der Kugelmühle hängt von ihrem Durchmesser ab und berechnet sich nach

$$n_{kritisch} = \frac{0.705}{\sqrt{d_{Mühle} - d_{kugel}}}.$$

Alternativ kann die mechanische Behandlung auch in einer Strahlmühle vorgenommen werden. Daher ist eine alternative Ausführungsform des erfindungsgemäßen Verfahrens bevorzugt, in der mechanische Behandlung des Ausgangsrefraktärmetalls in einer Strahlmühle durchgeführt wird.

Nach dem Prinzip einer Strahlmühle werden Teilchen in einem Gasstrom vermahlen, ohne dass hierzu mechanische Werkzeuge wie beispielsweise schnelllaufende Rotoren verwendet werden. Das Mahlgas wird durch Düsen in einen Mahlraum eingebracht und so stark beschleunigt, dass die jeweiligen Partikel mitgerissen werden und aufeinandertreffen. Da das Behandeln der Partikel hauptsächlich autogen erfolgt, ist diese Methode besonders für die Zerkleinerung von sehr harten Materialien geeignet. Es wurde überraschend gefunden, dass im Rahmen der vorliegenden Erfindung herkömmliche Strahlmühlen eingesetzt werden können, um geeignete Partikel für die additive Fertigung zu erzeugen.

Erfindungsgemäß erfolgt mechanische Behandlung vorzugsweise bei einem Mahldruck von weniger als 8 bar. Vorzugsweise wird ein Mahlgas mit einer Mahlgastemperatur von 10 bis 40 °C verwendet, wobei sich die Temperatur auf das Gas unter Mahldruck bezieht. Überraschend hat sich gezeigt, dass sich durch die Verwendung einer Strahlmühle die Mahlzeit gegenüber der Kugelmühle verkürzen lässt. Insofern ist eine Ausführungsform bevorzugt, in der mechanische Behandlung für einen Zeitraum von 0,5 bis 3 Stunden, vorzugsweise 0,5 bis 1,5 Stunden durchgeführt wird.

Durch die erfindungsgemäß vorgesehene mechanische Behandlung des Pulvers können bereits Refraktärmetallpulver erhalten werden, die eine Reihe der Eigenschaften aufweisen, die für die Verwendung in der additiven Fertigung erforderlich sind, insbesondere in Bezug auf die Schütt- und Klopfdichte.

In einer bevorzugten Ausführungsform kann das erhaltene Refraktärmetallpulver weiterhin einer Klassifizierung unterworfen werden, um beispielsweise gewünschte Partikelgrößenbereiche zu erhalten. Daher sieht das Verfahren gemäß der vorliegenden Erfindung in einer bevorzugten Ausführungsform einen Schritt des Fraktionierens des Refraktärmetallpulvers vor.

Das Fraktionieren des Mahlguts erfolgt vorzugsweise mittels Siebung. insbesondere über einen Siebturm. Alternativ kann die Fraktionierung auch mittels anderer mechanischer Klassierverfahren erfolgen. Hierzu können Apparate wie Schwerkraftsichter, Wirbelschichten, Zick-Zack-Sichter, Zyklone, Flietkraftabscheider, Spiralsichter oder dynamische Windsichter beziehungsweise Abwandlungen dieser Grundprinzipien verwendet werden.

Sofern die mechanische Behandlung des Ausgangsrefraktärmetalls in einer Strahlmühle durchgeführt wird, kann dies vorteilhaft mit einer Fraktionierung mittels Sichtung kombiniert werden. Hierbei ist eine Ausführungsform bevorzugt, in der die Strahlmühle über einen dynamischen Windsichter verfügt. Bevorzugt werden klassische Sichterräder verwendet, deren Drehzahl so hoch eingestellt wird, dass die sich einstellende Trenngrenze feiner als die kleinste Korngröße der zu behandelnden Partikel ist. In diesem Fall kann zwar das Mahlgas die Mühle verlassen, die Partikel verbleiben aber im Mahlraum. Lediglich der Feinstanteil wird mit dem Mahlgasstrom aus der Mühle entfernt und kann als Nebenprodukt in einem Filter abgeschieden werden.

Eine Strahlmühle wird in der Regel kontinuierlich betrieben. Im Rahmen der vorliegenden Erfindung hat sich jedoch gezeigt, dass die Strahlmühle in diesem Fall vorteilhaft im Batchbetrieb arbeitet. Die Mühle kann automatisch gefüllt und das Pulver für die oben genannte Zeit behandelt und in einem weiteren Schritt aus dem Apparat entfernt werden. Die Anlage kann dann wieder befüllt und eine weitere Behandlung begonnen werden. Das Austragen der behandelten Partikel aus dem Mahlraum kann dabei über verschiedene Varianten erfolgen. In einer bevorzugten Ausführungsform wird das Mahlgut über eine Klappe oder ein Ventil, welches nach einer vorgegebenen Zeit öffnet, mit dem Mahlgasstrom aus dem Mahlraum in einen separaten Filter geblasen. In einer alternativ bevorzugten Ausführungsform wird das behandelte Refraktärmetallpulver durch das Absenken der Sichterdrehzahl und einen Zyklon, der sich zwischen Mahlapparat und Filter befindet, abgeschieden. Nach dem Austragsvorgang kann die Sichterdrehzahl wieder auf den ursprünglich hohen Wert zurückgestellt werden. Danach kann der Vorgang von neuem beginnen, und so oft wiederholt werden, bis die gewünschte Menge vollständig verarbeitet wurde.

Das erfindungsgemäße Verfahren bietet den Vorteil, dass die Partikelgrößenverteilung der zu verarbeitenden Metallpulver je nach Bedarf und angedachtem Verarbeitungsverfahren eingestellt werden können.

Das als Ausgangspulver eingesetzte Refraktärmetallpulver weist eine Korngrößenverteilung D10 von mindestens 10 $\mu$m auf. In einer bevorzugten Ausführungsform weist das Ausgangsrefraktärmetallpulver eine Kornverteilung in den Grenzen von 10 bis 250 $\mu$m, vorzugsweise 10 bis 150 $\mu$m auf, bestimmt mittels Laserbeugung.

Das erfindungsgemäße Refraktärmetallpulver ist besonders für den Einsatz als Werkstoff in der additiven Fertigung vorgesehen. Daher ist ein weiterer Gegenstand der vorliegenden Erfindung die Verwendung eines Refraktärmetallpulvers gemäß der vorliegenden Erfindung in der additiven Fertigung.

Die Vorteile der vorliegenden Erfindung sollen anhand der Figuren und des folgenden Beispiels näher verdeutlicht werden, wobei diese keinesfalls als Einschränkung des Erfindungsgedanken zu verstehen ist.

BEISPIELE / FIGUREN

Ein Wolframmetall-Pulver mit einer Ausgangspartikelgrößenverteilung D10 von 39,2 $\mu$m und D90 von 151 $\mu$m wurde wie in den Beispielen 1 und 2 beschrieben verarbeitet.

Das erhaltene Pulver wurde über die in Tabelle 1 genannten Siebe in einzelne Fraktionen geteilt.

Tabelle 1:

| Fraktion | Ideale Siebreihe mit $a_i$ = konstant | Quotient $a_i = x_{i+1}/x_i$ | Gewähltes Sieb |
|---|---|---|---|
| Fi | 22.8175 | - | wird nicht verwendet |
| $F_2$ | 32.0798 | 1.4059 | 32 $\mu$m |
| $F_3$ | 45.1020 | 1.4059 | 45 $\mu$m |
| $F_4$ | 63.4104 | 1.4059 | 63 $\mu$m |
| $F_5$ | 89.1507 | 1.4059 | 90 $\mu$m |
| $F_6$ | 125.3399 | 1.4059 | 125 $\mu$m |

Die erhalten Fraktionen

$F_1$: < 45 $\mu$m > 32 $\mu$m

$F_2$ < 63 $\mu$m > 45 $\mu$m

$F_3$ < 90 $\mu$m > 63 $\mu$m

$F_4$ < 125 $\mu$m > 90 $\mu$m

wurden zur Bestimmung ihrer D10-, D50-, D90- und D95-Werte der Korngrößenverteilung jeweils mittels Laserbeugung an einem Mastersizer 3000 der Firma Malvern Panalytical vermessen.

1. Kugelmühle

In einer Kugelmühle (Außendurchmesser = 26 cm und Länge = 45 cm) mit 40 kg 4 mm Hartmetall Kugeln wurden 20 kg des Wolframmetall-Pulvers vermahlen. Die Drehzahl der Mühle lag bei 40 U/min bei einer Dauer von 5 Stunden. Anschließend wurde das Material < 63 $\mu$m gesiebt. Die Ergebnisse sind in Tabelle 2 zusammengefasst.

Tabelle 2:

| | $D_{10}/\mu$m | $D_{50}/\mu$m | $D_{99}/\mu$m | $D_{95}/\mu$m |
|---|---|---|---|---|
| Kornverteilung Ausgangsmaterial | 39,2 | 87,5 | 151,0 | 170,0 |
| Kornverteilung nach der Verrundung in der Kugelmühle | 17,3 | 56,5 | 113,3 | 131,0 |
| Siebung > 63 $\mu$m (Massenanteil 48%) | 69,0 | 94,8 | 131,5 | 143,0 |
| Siebung < 63 $\mu$m (Massenanteil 52 %) | 13,7 | 32,3 | 66,5 | 77,6 |

2. Strahlmühle

In einem zweiten Beispiel wurde das Wolframmetall-Pulver in einer Strahlmühle verarbeitet. Hierfür wurde eine Strahlmühle von der Firma Alpine vom Typ AFG 100 verwendet. Der Mahldruck des Mahlgases (Stickstoff (20°C)) wurde auf 5 bar eingestellt. Die Mühle war mit 2 Seitendüsen mit einer Bohrung von 1.9 mm und einer Bodendüse mit einer Bohrung von 3 mm ausgestattet. Das Sichterrad hatte währen der Verrundung eine Drehzahl von 3000 U/min und war so eingestellt, dass nur der entstehende Feinstanteil (feiner Staub ca. 1 bis 2% bezogen auf die Einsatzmenge) den Mahlraum verlassen konnte. Der Abrundungsvorgang fand mit 7.5 kg Wolframmetall-Pulver über eine Dauer von 1 Stunde statt. Das Pulver wurde anschließend mittels Siebung fraktioniert. Die Ergebnisse sind in Tabelle 3 zusammengefasst.

Tabelle 3:

| | $D_{10}/\mu m$ | $D_{50}/\mu m$ | $D_{90}/\mu m$ | $D_{95}/\mu m$ |
|---|---|---|---|---|
| Kornverteilung Ausgangsmaterial | 39,2 | 87,5 | 151,0 | 170,0 |
| Kornverteilung nach der Verrundung in der Strahlmühle AFG 100 | 21,8 | 74,3 | 128,0 | 144,0 |
| Siebung <106 $\mu m$ > 63 $\mu m$ (Massenanteil 38.5%) | 72,0 | 91,4 | 116,0 | 124,0 |
| Siebung <63 $\mu m$ > 45 $\mu m$ (Massenanteil 14.4%) | 51,9 | 63,1 | 77,3 | 82,7 |
| Siebung <45 $\mu m$ > 32 $\mu m$ (Massenanteil 14.0%) | 35,6 | 45,6 | 58,4 | 63,2 |
| Siebung <32 $\mu m$ (Massenanteil 38.5%) | 13,6 | 22,3 | 35,7 | 39,8 |

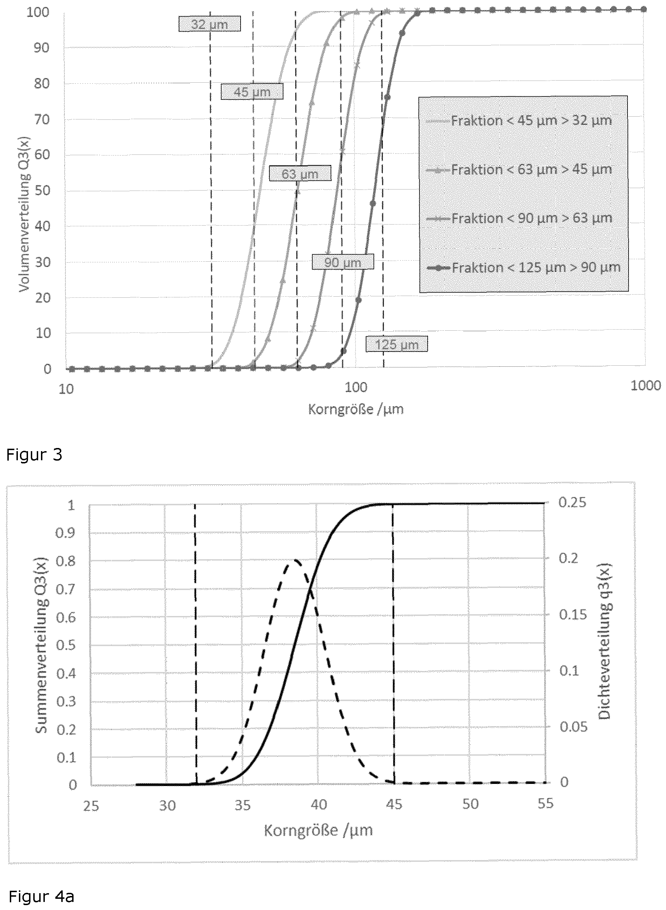

Figur 3 zeigt die mittels Laserbeugung gemessene Häufigkeitsverteilung, wobei die gestrichelten Linien jeweils die Maschengröße der verwendeten Siebe anzeigen. Wie deutlich zu sehen ist, überschreitet die mittels Laserbeugung ermittelte Korngrößenverteilung jeweils die Maschenweite des gröberen Siebes. Im Falle von Partikeln in Form volumengleicher Kugeln sollte die Verteilung jeweils zwischen den gestrichelten Linien liegen. Die Abweichung wird daher auf die nicht kugelförmige Form der Partikel des erfindungsgemäßen Pulvers zurückgeführt. Ebenfalls ersichtlich ist die Parallelverschiebung der Verteilungskurven, die sich durch die Reihe der gewählten Siebe (vergleiche Faktor a) ergibt.

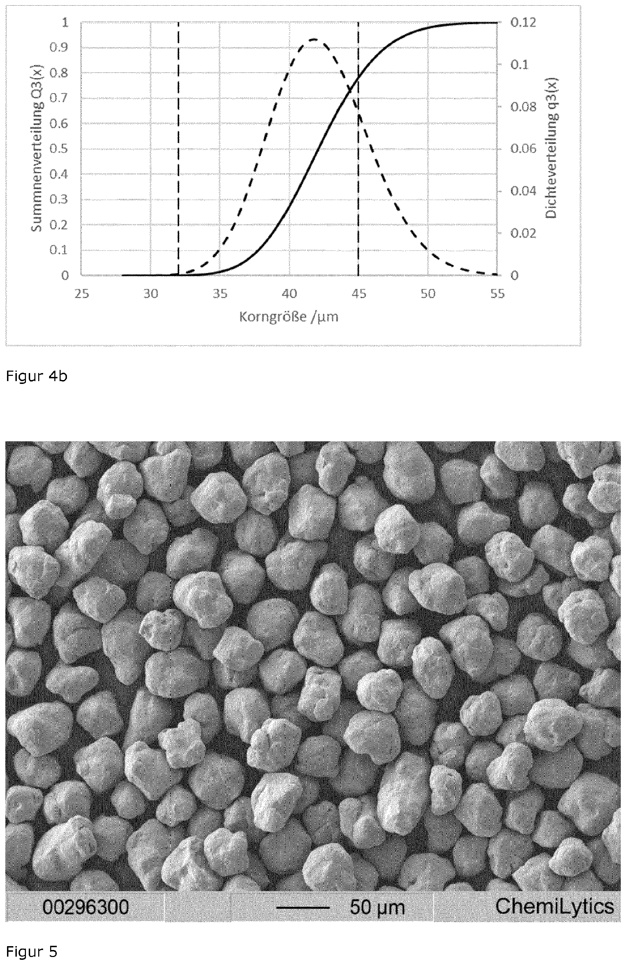

Figur 4a und 4b zeigen die Korngrößenverteilung eines herkömmlichen Wolframmetallpulvers mit kugelförmigen Partikeln im Vergleich zur Korngrößenverteilung eines erfindungsgemäßen Wolframmetallpulvers. Figur 4a zeigt die Korngrößenverteilung fraktionierter kugelförmiger Partikel über: feines Sieb 32 $\mu m$; grobes Sieb 45 $\mu m$. Figur 4b zeigt die Kornverteilung fraktionierter nicht kugelförmiger Partikel gemäß der vorliegenden Erfindung über: feines Sieb 32 $\mu m$; grobes Sieb 45 $\mu m$.

Figur 5 zeigt eine REM-Aufnahme eines erfindungsgemäßen Wolframmetallpulvers. Deutlich ist die nicht sphärische Form der Partikel zu erkennen.

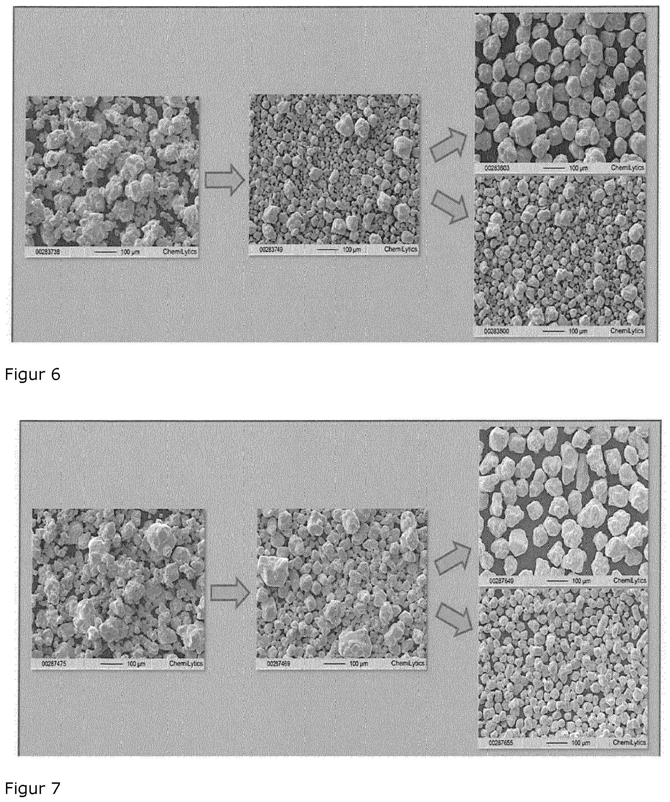

Figur 6 zeigt ein Wolframmetallpulver, das gemäß Beispiel 1 in einer Kugelmühle hergestellt wurde.

Figur 7 zeigt ein Wolframmetallpulver, das gemäß Beispiel 2 in einer Strahlmühle hergestellt wurde.

Im Rahmen der Diskussion der Nachhaltigkeit spielt die Frage des Energieverbrauchs eine entscheidende Rolle. Tabelle 4 gibt einen Überblick über den spezifischen Energiebedarf an elektrischer Energie für das erfindungsgemäße Verfahren im Vergleich zur Schmelzsphärodisierung für Wolframmetallpulver.

Tabelle 4:

| | erfindungsgemäß Kugelmühle | erfindungsgemäß Strahlmühle | Vergleich Schmelzsphärodisierung (RF-Plasma) |
|---|---|---|---|
| Energieeintrag | < 0,6 kWh/kg | 1-2 kWh/kg | > 15 kWh/kg |

Die spezifischen Energieverbräuche stellen einen wesentlichen Faktor der Fertigungskosten und einer ökologisch nachhaltigen Produktion dar. In dem sehr hohen Energieaufwand zeigt sich deutlich der wesentliche Nachteil des herkömmlichen Verfahrens der Schmelzsphärodisierung. Gerade bei der Verarbeitung von Wolfram, einem Metall mit einer sehr hohen Schmelztemperatur, werden für die Erzeugung von gut fließfähigen Pulvern, wie sie in der additiven Fertigung benötigt werden, hohe Energiemengen benötigt. Im Gegensatz dazu zeigt das erfindungsgemäße Verfahren eine einfache und energieeffiziente Alternative auf.

**Patentansprüche**

1. Nicht-sphärisches Refraktärmetallpulver für die additive Fertigung von dreidimensionalen Bauteilen, **dadurch gekennzeichnet, dass** das Pulver aus nichtkugelförmigen Partikeln besteht, wobei jeder Partikel $A_n$ Abmessungen aufweist, wobei mindestens 2 der Abmessungen $A_n$ verschieden voneinander sind.

2. Refraktärmetallpulver gemäß Anspruch 1, **dadurch gekennzeichnet, dass** das Pulver eine Korngrößenverteilung aufweist, wie folgt bestimmt:

   • Sieben des Refraktärmetallpulvers unter Verwendung von i Sieben, wobei i ≥2 ist, und wobei die Siebe eine unterschiedliche Maschenweite aufweisen;

• Erhalt von $F(x_i)$ = i + 1 Fraktionen, mit einer Grobkorn-Fraktion $F(x_i+1)$ mit $F(x_i+1)$ > $x_i$; einer Mittelkorn-Fraktionen $F(x_i)$ mit $F(x_i)$ = $x_i$ und einer Feinkorn-Fraktion $F(x_i-1)$ mit $F(x_i-1)$ < $x_i$, wobei $x_i$ die Maschenweite des Siebs bezeichnet und wobei $x_{i+1}/x_i$ = $a_i$ mit $1,1 \leq a_i \leq 1,5$;
• Bestimmen der Korngrößenverteilung der erhaltenen Mittelkorn-Fraktion $F(x_i)$ mittels Laserbeugung,

wobei der mittels Laserbeugung bestimmte D90-Wert der Korngrößenverteilung der Fraktion $F(x_i)$ jeweils größer ist als die Maschenweite des Siebs $x_i+1$, wobei gilt $x_i+1$ > $x_i$.

3. Refraktärmetallpulver gemäß Anspruch 2, **dadurch gekennzeichnet, dass** Siebe einer Reihe, bei der sich die Siebmaschen $x_i$ der Siebe jeweils um einen konstanten Faktor unterscheiden, insbesondere mit Sieben für die gilt $x_i+1$ = $a_i*x_i$; wobei $1,38 < a_i < 1,43$, verwendet werden.

4. Refraktärmetallpulver gemäß wenigstens einem der Ansprüche 2 oder 3, **dadurch gekennzeichnet, dass** für die Fraktionierung Siebe mit folgenden Maschenweiten xi verwendet werden:

$x_i$: 32 $\mu$m +/- 5 $\mu$m;
$x_{i+1}$: 45 $\mu$m +/- 8 $\mu$m;
$x_{i+2}$: 63 $\mu$m +/- 12 $\mu$m;
$x_{i+3}$: 90 $\mu$m +/- 20 $\mu$m;
$x_{i+4}$: 125 $\mu$m +/- 20 $\mu$m.

5. Refraktärmetallpulver gemäß wenigstens einem der vorangehenden Ansprüche, **dadurch gekennzeichnet, dass** das Pulver eine Korngrößenverteilung aufweist, die einer logarithmischen Normalverteilung entspricht.

6. Refraktärmetallpulver gemäß wenigstens einem der vorangehenden Ansprüche, **dadurch gekennzeichnet, dass** das Refraktärmetall ausgewählt ist aus der Gruppe der Metalle der 4. Nebengruppe, der 5. Nebengruppe und der 6. Nebengruppe des Periodensystems der Elemente.

7. Refraktärmetallpulver gemäß wenigstens einem der vorangehenden Ansprüche, **dadurch gekennzeichnet, dass** das Pulver eine Fließfähigkeit von nicht mehr als 9 s, vorzugsweise von nicht mehr als 6 s aufweist, bestimmt mittels ASTM B213.

8. Refraktärmetallpulver gemäß wenigstens einem der vorangehenden Ansprüche, **dadurch gekennzeichnet, dass** das Pulver eine Schüttdichte von wenigstens 40% bevorzugt größer 45%, besonders bevorzugt größer 50% der theoretischen Dichte des Refraktärmetalls aufweist, bestimmt gemäß ASTM B329.

9. Refraktärmetallpulver gemäß wenigstens einem der vorangehenden Ansprüche, **dadurch gekennzeichnet, dass** das Pulver eine Klopfdichte von wenigstens 45%, bevorzugt größer 50%, besonders bevorzugt größer 56% der theoretischen Dichte des Refraktärmetalls auf, bestimmt gemäß ASTM B527.

10. Refraktärmetallpulver gemäß wenigstens einem der vorangehenden Ansprüche, **dadurch gekennzeichnet, dass** das Pulver einen Sphärizitätsfaktorvon < 0,95, vorzugsweise 0,65 bis 0,9 aufweist, bestimmt mittels Bildanalyse.

11. Verfahren zur Herstellung eines Refraktärmetallpulvers gemäß wenigstens einem der Ansprüche 1 bis 10, umfassend die folgenden Schritte:

i) Bereitstellen eines Ausgangsrefraktärmetallpulvers mit einer Korngrößenverteilung D10 von wenigstens 10 $\mu$m und D90 kleiner 1000 $\mu$m, jeweils bestimmt mittels Laserbeugung;
ii) mechanisches Behandeln des Ausgangsrefraktärmetallpulvers unter Erhalt des Refraktärmetallpulvers.

12. Verfahren gemäß Anspruch 11, **dadurch gekennzeichnet, dass** Schritt b) in einer Kugelmühle durchgeführt wird, wobei der Durchmesser der Mahlkugeln vorzugsweise höchstens 8 mm, besonders bevorzugt 4 mm nicht übersteigt und/oder das Gewichtsverhältnis von Refraktärmetallpulver zu Mahlkugel vorzugsweise 1:1 bis 1:5 beträgt.

13. Verfahren gemäß Anspruch 11, **dadurch gekennzeichnet, dass** Schritt b) in einer Strahlmühle durchgeführt wird, wobei der Druck des Mahlgases vorzugsweise 8 bar nicht überschreitet

14. Verfahren gemäß wenigstens einem der Ansprüche 11 bis 13, **dadurch gekennzeichnet, dass** das Ausgangsrefraktärmetallpulver eine Korngrößenverteilung von 10 bis 250 $\mu$m, vorzugsweise 10 bis 150 $\mu$m aufweist, bestimmt mittels Laserbeugung.

15. Verwendung eines Refraktärmetallpulvers gemäß wenigstens einem der Ansprüche 1 bis 10 in der additiven Fertigung.

Figur 1

Figur 2

Figur 3

Figur 4a

Figur 4b

Figur 5

Figur 6

Figur 7

Europäisches
Patentamt

European
Patent Office

Office européen
des brevets

# EUROPÄISCHER RECHERCHENBERICHT

**Nummer der Anmeldung**

EP 22 19 0596

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/023941 A1 (WEINMANN MARKUS [DE] ET AL) 27. Januar 2022 (2022-01-27) * Absätze [0032] – [0035], [0042], [0047] – [0050] * * Abbildung 1 * * Tabellen 1,2 * | 1-7,9, 11-15 | INV. B22F9/04 B22F1/06 B33Y70/00 B22F1/052 |
| X | DE 10 2019 217654 A1 (STARCK TANTALUM & NIOBIUM GMBH H C) 20. Mai 2021 (2021-05-20) * Absätze [0017], [0018], [0021], [0025] – [0029], [0045]; Tabelle 1 * | 1-7,9, 11-15 | |
| X | SUN Y Y ET AL: "Manipulation and Characterization of a Novel Titanium Powder Precursor for Additive Manufacturing Applications", JOM: JOURNAL OF METALS, SPRINGER NEW YORK LLC, UNITED STATES, Bd. 67, Nr. 3, 4. Februar 2015 (2015-02-04), Seiten 564-572, XP035455815, ISSN: 1047-4838, DOI: 10.1007/S11837-015-1301-3 [gefunden am 2015-02-04] * Seite 565 * * Seite 567 * * Seite 569 * * Abbildungen 1, 2, 5 * * Seite 570; Tabelle 1 * | 1-6,8,9, 12-15 | RECHERCHIERTE SACHGEBIETE (IPC) B33Y B22F |
| A | DE 10 2019 130941 A1 (ASSONIC DORSTENER SIEBTECHNIK GMBH [DE]; ULT AG [DE]) 20. Mai 2021 (2021-05-20) * das ganze Dokument * | 1-15 | |

Der vorliegende Recherchenbericht wurde für alle Patentansprüche erstellt

| Recherchenort | Abschlußdatum der Recherche | Prüfer |
|---|---|---|
| Den Haag | 7. Februar 2023 | Forestier, Gilles |

EPO FORM 1503 03.82 (P04C03)

# EP 4 324 580 A1

## ANHANG ZUM EUROPÄISCHEN RECHERCHENBERICHT
## ÜBER DIE EUROPÄISCHE PATENTANMELDUNG NR.

EP 22 19 0596

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07−02−2023

| Im Recherchenbericht angeführtes Patentdokument | Datum der Veröffentlichung | Mitglied(er) der Patentfamilie | Datum der Veröffentlichung |
|---|---|---|---|
| US 2022023941 A1 | 27−01−2022 | AU 2019252333 A1 | 01−10−2020 |
| | | BR 112020019365 A2 | 29−12−2020 |
| | | CA 3093878 A1 | 17−10−2019 |
| | | CN 111918737 A | 10−11−2020 |
| | | EP 3774121 A1 | 17−02−2021 |
| | | IL 277960 A | 30−11−2020 |
| | | JP 2021521333 A | 26−08−2021 |
| | | KR 20200141043 A | 17−12−2020 |
| | | US 2022023941 A1 | 27−01−2022 |
| | | WO 2019197376 A1 | 17−10−2019 |
| DE 102019217654 A1 | 20−05−2021 | AU 2020382062 A1 | 26−05−2022 |
| | | BR 112022006007 A2 | 06−09−2022 |
| | | CA 3157126 A1 | 20−05−2021 |
| | | CN 114641357 A | 17−06−2022 |
| | | DE 102019217654 A1 | 20−05−2021 |
| | | EP 4058224 A1 | 21−09−2022 |
| | | IL 292769 A | 01−07−2022 |
| | | KR 20220099107 A | 12−07−2022 |
| | | TW 202132579 A | 01−09−2021 |
| | | US 2022395900 A1 | 15−12−2022 |
| | | WO 2021094560 A1 | 20−05−2021 |
| DE 102019130941 A1 | 20−05−2021 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020220143 A

**In der Beschreibung aufgeführte Nicht-Patentliteratur**

- **POWER, M.C.** *Journal of Sedimentary Petrology,* 1953, vol. 23, 118